# EUROPEAN PATENT SPECIFICATION

(11) **EP 2 043 300 B1**
(45) Date of publication and mention of the grant of the patent: **21.12.2011**
(21) Application number: 07018856.0
(22) Date of filing: 25.09.2007
(51) Int. Cl.: H04L 12/28, H04L 12/56

(54) **Data transmission network, method, network element and pro-gram**
Datenübertragungsnetzwerk, Verfahren, Netzwerkelement und Programm
Réseau de transmission de données, procédé, élément de réseau et programme

(43) Date of publication of application: 01.04.2009
(73) Proprietor: Nokia Siemens Networks Oy, 02610 Espoo (FI)
(72) Inventor: Guan, Qi, Dr., 1210 Wien (AT)
(74) Representative: Bruglachner, Thomas E.

(56) References cited:
- US-A1- 2003 115 610
- US-A1- 2004 258 105
- US-A1- 2006 193 295
- US-A1- 2007 147 234
- US-A1- 2007 171 936
- YANG INTEL CORP P ZERFOS UCLA E SADOT AVAYA L: "Architecture Taxonomy for Control and Provisioning of Wireless Access Points (CAPWAP); rfc4118.txt" IETF STANDARD, INTERNET ENGINEERING TASK FORCE, IETF, CH, June 2005 (2005-06), XP015041883 ISSN: 0000-0003
- CALHOUN P ET AL: "CAPWAP Protocol Binding for IEEE 802.11; draft-ietf-capwap-protocol-b inding-ieee80211-03.txt" IETF STANDARD-WORKING-DRAFT, INTERNET ENGINEERING TASK FORCE, IETF, CH, vol. capwap, no. 3, April 2007 (2007-04), XP015049225 ISSN: 0000-0004

## Description

This invention relates to a data transmission network, comprising:
- a first network element that comprises a first part of a first transmitting unit for wireless transmission,
- a second network element that comprises a first part of a second transmitting unit for wireless transmission, and
- a third network element that comprises a second part of the first transmitting unit and a second part of the second transmitting unit.

There is, for instance, the CAPWAP (Control And Provisioning of Wireless Access Points) protocol that may be used to separate the parts of one transmitting unit and to locate each part at a different location, see for instance Yang et al: "Architecture Taxonomy for Control and Provisioning of Wirelesss Access Points; rfc4118.txt" IETF Standard, June 2005, XP015041883, ISSN: 0000-0003. The CAPWAP protocol is also explained in Calhoun P. et al: "CAPWAP Protocol Binding for IEEE802.11; draft-ietf-capwap-protocol-b inding-ieee80211-03.txt", IETF Standard-Working-Draft, IETF, vol. capwap, no. 3, April 2007, XP015049225, ISSN: 0000-0004.

It may also be possible to arrange the second parts of different transmitting units in one network element in order to use this network element efficiently. Nevertheless, each transmitting unit would have the same data transmission capacity compared with the case where the second parts are located in different network elements.

A data network where different links (wired and wireless, for example) are provided and said links are selected dynamically is disclosed in US Patent Application Publication US2007/0171936A1. In Publication US2006/0193295A1 an apparatus is disclosed for permitting a network terminal having multiple network connections. US Patent Application Publication US2003/0115610A1 describes a method wherein a cable or DSL modem unit and a wireless access point are combined into one single network unit. A method for transmitting a network content via multiple data streams is disclosed in US Patent Application Publication US2007/0147234A1. An optical data network providing connectivity throughout a building or facility by using wireless access points that are coupled to the network is shown in US2004/0258105A1.

It is an object of the invention to provide a simple network, especially a network that provides high data transmission rates to users. Furthermore, a method should be given, especially for operating the network as well as a network element and a computer program product.

This object is solved by the network of claim 1. Embodiments are given in the sub claims.

The data transmission network may additionally comprise:
- a control unit that controls the transmission of data from the first network element via the second network element to the third network element or vice versa, i.e., from the third network element via the second network element to the first network element.

The first network element, the second network element and the third network element are different network elements, for instance, network elements at different places, each with a separate power supply.

The control unit may be part of the third network element or of another network element, for instance, if the functions of the second part are distributed.

By using this network, it is possible at least to double the data transmission capacity of the first network element because a first data transmission path may be established directly between the first network element and the third network element and a second data transmission path may be established indirectly between the first network element and the third network element using also the second network element, i.e., the data packets are redirected via the second network element.

There may be a first link between the first network element and the third network element and a second link between the second network element and the third network element. A third link may be provided between the first network element and the second network element. The third link may be a wireless link. The first link and the second link may be of the same transmission type that is different from the transmission type of the third link. The first link and the second link may be lines, for instance, electrical conductive lines or optical lines comprising optical fibers.

The first link and the second link may run along the same way in a first portion of both links. The first link and the second link may follow different ways in a second portion of the first link and in a second portion of the second link. This is a typical example for home networks in a close neighborhood connected to the same Internet Service Provider (ISP). The distance between the first network element and the second network element is therefore comparably short and allows the establishment of the third link, for instance by using wireless techniques like WLAN (Wireless Local Area Network). The first portion may be longer than the longest second portion, for instance at least by factor two. The first link and the second link may be parts of the same bundle of lines or fibers in the first portion. For optical lines the first link and the second link may even be established via the same optical fiber in the first portion.

The first network element and the second network element may be arranged in different houses or in different apartments. Therefore, the first network element and the second network element belong to different families. The houses may be adjacent houses or apartments or they may be in close neighborhood with regard to each other, i.e., only one third house or one apartment between them or only two other houses or apartments between them. Alternatively, they may be arranged in the same room, for instance when used in an enterprise.

The first network element may transmit data via the third link according to the WLAN transmission protocol, especially to or from the second network element. Thus, a standardized protocol is used that is supported by many manufacturers.

A first transmitter/receiver unit may be linked to the first part of the first transmitting unit. The first transmitter/receiver unit may be part of the first network element. A second transmitter/receiver unit may be linked to the first transmitter/receiver unit and to the second part of the first transmitting unit. The second transmitter/receiver unit may be part of the third network element.

A third transmitter/receiver unit may be linked to the first part of the second transmitting unit. The third transmitter/receiver unit may be part of the second network element. A fourth transmitter/receiver unit may be linked to the third transmitter/receiver unit and to the second part of the second transmitting unit. The fourth transmitter/receiver unit may be part of the third network element.

The first link may be between the first transmitter/receiver unit and the second transmitter/receiver unit. The second link may link the third transmitter/receiver unit and the fourth transmitter/receiver unit. The transmitter/receiver units may be xDSL (x Digital Subscriber Line) modems (Modulator/ Demodulator), for instance implementing OFDM (Orthogonal Frequency Division Multiplexing). Alternatively, analogue or digital cable modems may be used. It is also possible to use, for instance, optical transducers in the transmitter/receiver units.

The first part of the first transmitting unit and the first part of the second transmitting unit may each comprise a media access control unit that processes data according to the IEEE 802. 11 MAC protocol layer. In this first case, local MAC scheme is used.

Alternatively, a split MAC scheme may be used that is between local MAC scheme and remote MAC scheme.

According to a next alternative, the first part of the first transmitting unit and the first part of the second transmitting unit may each comprise a physical layer control unit that processes data according to the IEEE 802.11 PHY (physical) protocol layer. There may be no processing of higher protocol layers in the first part of the first transmitting unit and in the first part of the second transmitting unit, especially no processing of the MAC layer, i.e., remote MAC scheme may be used.

Each scheme of distributing functions has its own advantages and disadvantages. The first parts of the transmitting units may, for instance, have only few components for remote MAC scheme compared with the first parts of the transmitting units used in the other two schemes.

The first part of the first transmitting unit and the first part of the second transmitting unit may each comprise a wireless transmitter/receiver unit that operates according to IEEE 802.11 protocol family, especially a, b, g and h or higher extensions, i.e., according to WLAN. Data transmission rate via WLAN may be much higher than via lines, for instance if ADSL is used. Therefore, it may be possible to use the first network element for data flows that are established via at least two lines.

The first network element may be able to transmit simultaneously at least in part:
- a first data flow between a fourth network element and the third network element via the first network element but not via the second network element, and
- a second data flow between a fifth network element and the third network element via the first network element and the second network element.

The fourth network element and/or the fifth network element may be user devices, i.e., terminals or end points. Personal computers, notebooks, television sets, etc. are examples for these network elements. Alternatively, these devices may control further networks.

The data transmission rate of wireless transmission of the first network element may be higher than that via a line, for instance higher than factor two. Therefore, the first network element may simultaneously forward at least two data flows that simultaneously use two lines.

A method for data transmission is given, comprising:
- providing a first network element that comprises a first part of a first transmitting unit for wireless transmission,
- providing a second network element that comprises a first part of a second transmitting unit for wireless transmission,
- providing a third network element that comprises a second part of the first transmitting unit and a second part of the second transmitting unit,
- transmitting first data from the first network element via the second network element to the third network element or from the third network element via the second network element to the first network element.

The first data may be user data, for instance video data or telephone data.

The first data may be transmitted between the first network element and the second network element via a wireless link. The first data may be transmitted via a line between the second network element and the third network element. The line may be electrically conductive or optically transparent.

Second data may be transmitted between the first network element and the third network element before transmitting the first data. The second data may comprise a request to reserve a transmitting resource and/or a response to use a wireless resource, for instance a channel. Therefore, the second data may be control data.

Third data may be transmitted between the third network element and the second network element before transmitting the first data. The third data relates to the forwarding of data in the second network element. The third data may also be control data. The third data may be transmitted after the transmission of the second data. The third data may comprise at least one logical channel association identifier (AID). The physical layer maps logical channels to physical channels, e.g., to frequencies.

Thus, control may always be performed involving the control unit, but not directly performed between the first network element and the second network element. This allows a simple implementation because user devices (IPTV, etc.) have not to be altered. Nevertheless, data flow can directly be forwarded between the first network element and the second network element enabling fast data transfer and redirecting data flows.

The first transmitting unit and the second transmitting unit may operate according to a method using centralized control function, especially according to local media access control, split media access control or remote media access control. These methods were described above in more detail.

The centralized control unit or control function may perform, for instance:
- for local MAC: key management for encryption and decryption to user,
- for split MAC additionally: association, and
- for remote MAC additionally: processing of control frames RTS(Ready To Send)/CTS(Clear to Send)/ACK(Acknowledgement), etc, and generation of beacon.

Physical layer processing may be performed in the first network element and in the second network element in all three MAC schemes. Physical layer processing may comprise: sending electrical signals via an antenna and receiving electrical signals via the antenna and/or modulation/demodulation.

There may be simultaneously or at the same time:
- a first data flow transmitted between a fourth network element and the third network element via the first network element but not via the second network element, and
- a second data flow between a fifth network element and the third network element via the first network element and the second network element.

Furthermore, a network element is provided, comprising:
- a control unit that is able to initiate a simultaneous first data flow between a fourth network element and a third network element via a first network element but not via a second network element, and
- a second data flow between a fifth network element and the third network element via the first network element and the second network element.

Thus, the same technical effects apply as discussed above with regard to the network and the method.

The network element may further comprise a unit that comprises a part of a first transmitting unit and a part of a second transmitting unit. The other part of the first transmitting unit may be located in the first network element. The other part of the second transmitting unit may be located in the second network element.

The network element may comprise a unit that checks responding to a request for establishing the second data flow whether a first link between the third network element and the first network element can be used for the second data flow. The request may come from network side, for instance from Internet, or from the first network element.

The network element may comprise a unit that determines that the first link can not be used and therefore uses a second link that is between the second network element and the third network element for the second data flow.

Furthermore, a network element is provided, comprising:
- at least one antenna,
- a first part of a first transmission unit, the first part being connected to the at least one antenna,
- a transmitter/receiver unit connected to the first part of the first transmitting unit.

The network element may comprise a unit that determines that it is not possible to use the transmitter/receiver unit for the forwarding of a data flow and requests for using the at least one antenna for forwarding of the data flow. This request may be transmitted by using the transmitter/receiver unit.

The network element may comprise a unit that requests a remote control unit whether a data flow can be forwarded using the transmitter/receiver unit and that may receive a response to this request. This response may indicate that the at least one antenna should be used for forwarding of the data flow instead of the transmitter/receiver unit.

The network element may comprise a repeater unit that repeats data received via a first wireless link and sends the repeated data via a second wireless link.

The invention further relates to a computer program product, comprising data for a processor. The processor performs the following method during the processing of the data:
- initiating the transmission of a first data flow between a fourth network element and a third network element via a first network element but not via a second network element, and
- initiating the transmission of a second data flow between a fifth network element and the third network element via the first network element and the second network element,
- the first data flow and the second data flow are transmitted at least in part simultaneously with regard to each other.

The program may be stored in a disk (magnetic hard disk, magnetic floppy disk, optical disc (CD, Compact Disc) or in a memory device (volatile: static RAM (Random Access Memory), dynamic RAM; nonvolatile: ROM (Read Only Memory), PROM (Programmable ROM), EPROM (Erasable PROM), EEPROM, (Electrically EPROM), flash EEPROM). Alternatively, the program may be transmitted via a data transmission network, for instance via the Internet.

The network element and the program may be used to operate the network of the invention or its embodiments as well as to perform the method of the invention or its embodiments.

In the following, embodiments of the invention are described with reference to the Figures, wherein:
- Figure 1: illustrates a data transmission network,
- Figure 2: illustrates three stacks of protocol layers, and
- Figure 3: illustrates control messages and data flows used in the network shown in Figure 1.

The embodiments are only for illustrative purposes and do not restrict the scope of the invention. The same reference signs refer to the same technical features if not stated otherwise. As far as "may" is used in this application it means the possibility of doing so as well as the actual technical implementation.

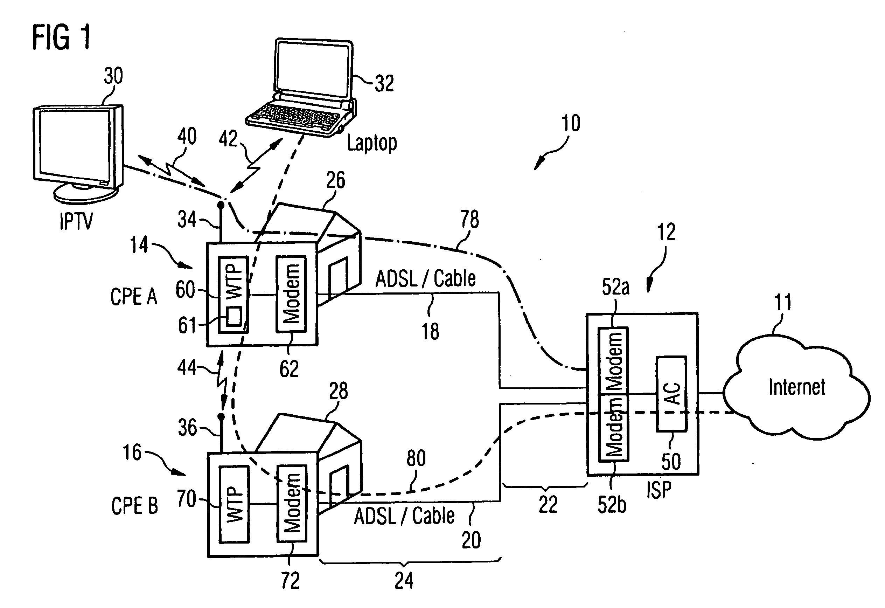

Figure 1 illustrates a data transmission network 10 that comprises Internet 11, a provider unit 12 (third network element in claims), a user unit 14 (first network element in claims) and a user unit 16 (second network element in claims). Provider unit 12 belongs to an Internet Service Provider (ISP) and is connected with Internet 11.

Provider unit 12 is connected to user unit 14 via a line 18, for instance, via two copper wires. Alternatively, an optical fiber may be used. Provider unit 12 is connected to user unit 16 via a line 20, for instance also a copper line or an optical fiber. Furthermore, provider unit 12 is connected to other user units that are not shown in Figure 1.

Lines 18 and 20 have a common portion 22 where they are running along the same way. Portion 22 may have a length longer than 100 meters, for instance for ADSL. There is a portion 24 where line 20 runs separately with regard to line 18. Portion 24 is typically shorter than 100 meters or shorter than 50 meters, for instance for ADSL. This is because line 18 is a line to a house 26 and line 20 is a line to another house 28 in the neighborhood of house 26, i.e., on an adjacent estate or on an estate in the same area but reachable by the electromagnetic field of an antenna 34 of user unit 14.

Furthermore, there are user devices 30 (fourth device in the claims) and 32 (fifth device in the claims) that belong to one user or to several users that are part of the family living in house 26. User device 30 is, for instance, an Internet television set or a computer that is used for Internet TV. User device 32 is, for instance, a laptop that is used for e-mail sending and downloading.

User unit 14 comprises an antenna 34. User unit 16 comprises an antenna 36. Both antennas 34 and 36 are used for radio frequency (RF) transmission of data packets according to WLAN standard IEEE 802.11 via:
- a wireless link 40 between user device 30 and user unit 14,
- a wireless link 42 between user device 32 and user unit 14, and
- a wireless link 44 between user unit 14 and user unit 16.

There may be further wireless links to other user devices linked to user unit 14 and/or 16.

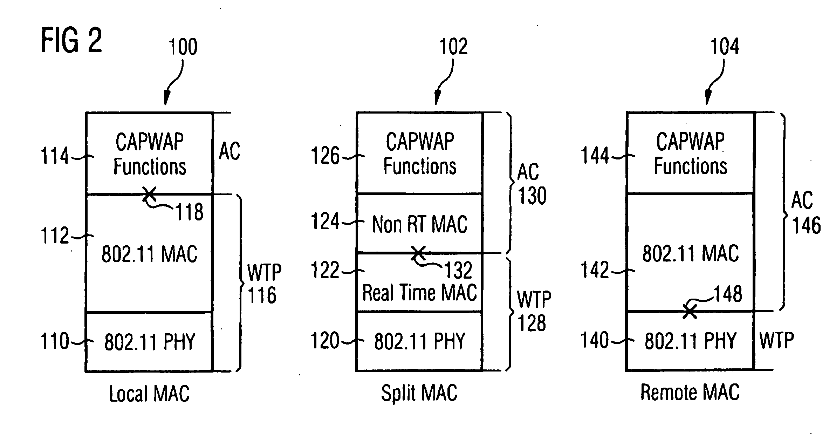

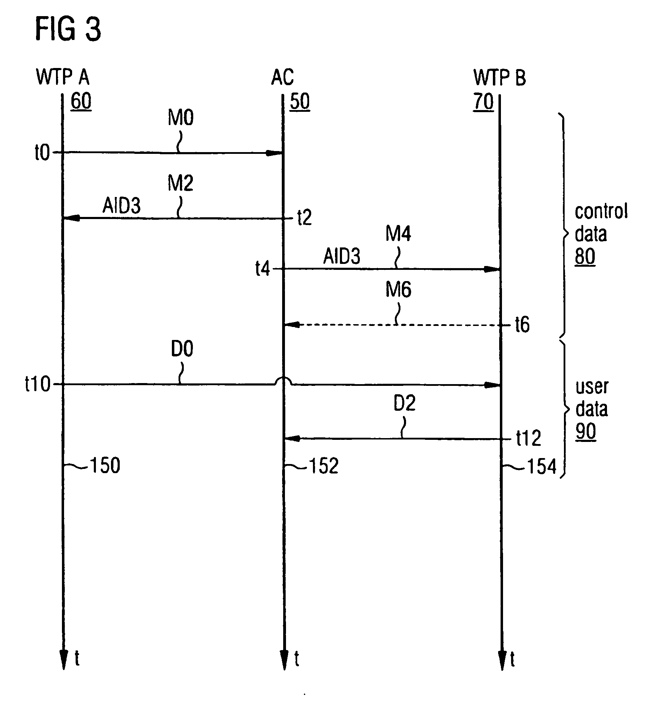

Provider unit 12 comprises an access controller 50 (AC) and a modem pool. Access controller 50 is used for both user units 14 and 16. The functions of access controller 50 are explained with reference to Figure 3 below in more detail. All functions of access controller 50 may be located in network element 12. Alternatively, only some functions of access controller 50 are performed in network element 12, because there are other access controllers that are specialized to perform the other functions. One function of access controller 50 is key management of encryption keys for data transmission between provider unit 12 and user devices 30, 32, especially for all three MAC schemes, i.e., local MAC, split MAC and remote MAC, that are described with reference to Figure 2. If split MAC scheme or remote MAC are used, access controller 50 performs further functions.

Two modems 52a, 52b of the modem pool are shown in Figure 1. Modems 52a and 52b may perform OFDM (Orthogonal Frequency Division Multiplexing) in the case of ADSL. Alternatively, modems 52a and 52b may be ordinary cable modems. Modem 52a is used by user unit 14 and modem 52b is used by user unit 16.

User unit 14 comprises:
- a terminating unit 60 (WTP, Wireless Termination Point), and
- a modem 62, that performs in each data transmission direction the inverse function compared with modem 52a.

Furthermore, there is a repeater unit 61 in termination unit 60 or additionally to termination unit 60 in user unit 14. An input terminal of repeater unit 61 is connected to antenna 34. An output terminal of repeater unit 61 is also connected to antenna 34. It is also possible to use two separate antennas for receiving and sending in stead of antenna 34. Repeater unit 61 is controlled by access controller 50.

User unit 16 comprises:
- a terminating unit 70 (WTP), and
- a modem 72, that performs in each data transmission direction the inverse function compared with modem 52b.

User unit 16 may optionally comprise a repeater unit, for instance for redirecting data flows via user unit 14.

Terminating units 60 and 70 perform the functions of the physical protocol layer for all three MAC schemes. Depending on the used MAC scheme it is possible that terminating units 60 to 70 perform functions of the MAC layer.

There are a data flow 78 and a data flow 80 after transmitting control messages with control data. Data flow 78 is between Internet 11 and user device 30 (IPTV) via provider unit 12, line 18, user unit 14 and link 40 but it is not via user unit 16. Data of data flow 78 is mainly transmitted from Internet 11 to user device 30, although the direction of data transmission is not relevant here.

Data flow 80 is between user device 32 and Internet 11, via link 42, user unit 14, link 44, user unit 16, line 20 and provider unit 12 in this order. Data transmission direction is again not relevant for data flow 80.

Both data flows 78 and 80 are transmitted at the same time or simultaneously. Therefore, the users of user device 14 have double bandwidth compared with the bandwidth of only line 18. This is reached by sharing resources, namely user unit 16 that is used by two user groups or families in the example.

Figure 2 illustrates three stacks 100 to 104 of protocol layers that may alternatively be used in three embodiments of the invention.

Stack 100 relates to a local MAC scheme and comprises:
- a physical layer 110 according to IEEE 802.11 PHY,
- a MAC layer 112 according to IEEE 802.11 MAC, especially according to IEEE 802.3, and
- a CAPWAP (Control And Provisioning of Wireless Access Points) function layer 114.

In local MAC scheme, the MAC layer is processed completely in user device 14, 16 together with the physical layer, see bracket 116. CAPWAP function layer 114 is processed only in provider device 12, access controller 50, and in user devices 30, 32. Examples of functions of MAC layer 112 are given below for stack 102. MAC layer 112 comprises real time MAC functions and non real time MAC functions.

A reference point 118 corresponds to the known Ethernet protocol. Therefore, MAC data packets are processed in user units 14, 16 for the purposes of authorization and/or switching, for instance.

Stack 102 relates to a split MAC scheme and comprises:
- a physical layer 120 according to IEEE 802.11 PHY,
- a real time part 122 of MAC layer,
- a non real time part 124 of MAC layer, and
- a CAPWAP function layer 126.

In split MAC scheme, the real time part 122 of MAC layer is processed in user devices 14, 16 together with the physical layer 120. CAPWAP function layer 114 is processed together with the non real time part 122 of MAC layer only in provider device 12 and in user devices 30, 32.

A reference point 132 corresponds to an Ethernet protocol that differs from the known Ethernet Protocol, for instance, a proprietary protocol may be used. Therefore, proprietary types of data packets are processed in user units 14, 16.

There may be the following distinction of real-time MAC functions and non real time MAC functions. Other distinction schemes are possible as well.

Real time or time critical functions of MAC layer are, for instance:
- beacon generation,
- probe response/transmission,
- processing of control frames:
   - RTS (Ready To Send),
   - CTS (Clear To Send),
   - ACK (Acknowledgement),
   - PS-Poll (Power Save),
   - CF-End (Contention Free),
   - CF-ACK,
- synchronization,
- retransmissions,
- transmission rate adaptations.

Non real time functions of MAC layer are, for instance:
- authentication/de-authentication,
- association/disassociation/re-association/distribution
- integration services: bridging between IEEE 802.11 and IEEE 802.3,
- privacy: IEEE 802.11 encryption/decryption,
- fragmentation/de-fragmentation.

Stack 104 relates to a remote MAC scheme and comprises:
- a physical layer 140 according to IEEE 802.11 PHY,
- a MAC layer 142 according to IEEE 802.11 MAC, especially according to IEEE 802.3 that is referred to in IEEE 802.11, and
- a CAPWAP function layer 144.

In remote MAC scheme only the physical layer 140 is processed in user devices 14, 16. The MAC layer 142 and CAPWAP function layer 144 are processed completely in provider device 12 and in user devices 30, 32, see bracket 146. Examples of functions of MAC layer 142 are given above for stack 102. MAC layer 142 comprises real time MAC functions and non real time MAC functions.

A reference point 148 corresponds to the known physical protocol, for instance simple repeater function. Therefore, only such a physical transmission but no processing of MAC data packets takes place in user units 14, 16.

Reference points 118, 132 and 148 are relevant for transmission of control data to provider unit 12 and for transmission of user data via line 18 and via line 20. Reference points 118, 132 and 148 are also relevant for transmission of user data via link 44.

It is, of course, possible to use other protocol stacks compared with stacks shown in Figure 2 or to separate the protocol stacks in a different manner.

Figure 3 illustrates control messages and data flows transmitted in the network shown in Figure 1. There are three time lines 150, 152 and 154. Time line 150 is for terminating unit 60. Time line 152 is for access controller 50, and time line 154 is for terminating unit 70.

It is supposed that data flow 78 is already established and that laptop 32 requests for a further channel of terminating unit 60. Therefore, terminating unit 60 sends a control message M0 to access controller 50 to request bandwidth for data transmission at time t0.

The time slots of the channels of terminating unit 60 and terminating unit 70 are synchronized. Thus, there may be no offset between the channels. This is also true for the logical channels with the same association identifier (AID). It is supposed that logical channel with association identifier AID3 of terminating unit 60 is synchronous with logical channel with association identifier AID3 of terminating unit 70, for instance.

Access controller 50 receives message M0 and decides to use data path 80 for the requested transmission. Access controller 50 knows the channels that are used in terminating unit 60 because it controls the usage of the channels. It is supposed that logical channel with AID1 of terminating unit 60 is used for data flow 78. Therefore, access controller 50 assigns the next free channel to user device 32, i.e., logical channel with AID2. Furthermore access controller 50 checks whether line 18 may be used for the requested transmission. It is supposed that this is not possible because of data flow 78 using the whole bandwidth of line 18. Thus, access controller 50 decides to use line 20 for data flow 80 after checking whether there is unused bandwidth left for line 20. Access controller 50 assigns the next free channel of terminating unit 60 to data flow 80, i.e. logical channel with AID3. This is signaled to terminating unit 60 via line 18 by using a message M2 at time t2. Message M2 contains data that indicate that logical channel with AID3 should be used in terminating unit 60 for the requested data flow 80.

Alternatively, a fixed logical channel of terminating unit 60 may be used for this purpose. Nevertheless, signaling is necessary to indicate that this channel should be used now.

Furthermore, access controller 50 signals terminating unit 70 that the corresponding channel for logical channel with AID3, i.e., also logical channel with AID3, should be used in terminating unit 70 for forwarding data of the requested data flow 80. A message M4 is sent from access controller 50 to terminating unit 70 via line 20 at time t4. Terminating unit 70 may confirm message M4 optionally by a message M6 at time t6.

After establishing data flow 80, user device 32 sends its e-mail data to terminating unit 60 via link 42. Terminating unit 60 forwards these data D0 to terminating unit 70 in logical channel with AID3 via link 44 at time t10. Access controller 50 is not involved in data transmission via link 44.

Terminating unit 70 receives user data D0 in logical channel with AID3 and forwards it as data D2 to access controller 50 via line 20 at time t20. There may be frequencies (assigned by access controller 50) that should be used during transmission via line 20 if ADSL is used, for instance. These frequencies may also form a logical channel.

Accordingly, the access controller 50 distributes the data traffic that comes from the Internet and that should be directed via user unit 14 to user devices 30, 32 selectively via both paths 78, 80, i.e., line 18 or alternatively line 20 and link 44. Line 18 has higher priority than line 20, i.e., it is used first.

It is of course possible to change the chronological order of messages M2 and M4, for instance.

Please note, that terminating units 60 and 70 do not perform IP address processing of the forwarded data packets. Access controller 50 may perform IP routing, for instance, to decide which logical channel and whether line 18 or 20 should be used for the transmission of a data packet received from Internet 11.

In the following, the technical teachings that were described already with reference to Figures 1 to 3 are described again but with other words. In the embodiment, a multi-homing service for ADSL (Asymmetrical Digital Subscriber Line)/cable provider by WLAN (Wireless Local Area Network) switching (Layer 2) is described.

There may be an Internet access for residential users based on DSL or cable. The Internet applications, however, may push the limits of the Internet, which is hardly adequate to support multiple VoIP (Voice over Internet Protocol), P2P (Peer to Peer) file sharing, swarming downloads, IPTV (Internet Protocol Television) and/or web transfers. There may be the concept for neighboring residents to share their broadband Internet. For example, a user in a family watches IPTV. The whole access traffic is served for downloading IPTV data flow. Another user of the same family might need much time if he wants send a large urgent e-mail at the same time. There may be the concept to allow this user to send his e-mail via his neighbors residential Internet access.

This idea may be referred to as "multi-homing". It is also possible to use it in an enterprise. The enterprise may subscribe to multiple ISPs and may route flows over both links. The idea may also be part of residential applications, for instance in the project PERM (Practical End host Multi-homing in Residential area), see for instance http://swing.cs.uiuc.edu/projects/perm/ under the title "PERM: Collaborative residential bandwidth sharing". The main idea of PERM is some kind of "load balancer". It classifies (based on statistic studies) the IP flows into light and heavy volumes and a scheduler assigns the flow to the least used link (maybe a neighbor residential link).

Contrary to "multi-homing" or PERM, the idea presented here is based on splitting of the functions of a transmitting unit for wireless data packet transmission. A standalone access point (or WLAN router) is split into two parts:
- access device (AD), and
- central control unit (CCU).

AD is located in every household and CCU is located in carrier. The connection between the two parts may be ADSL or cable modem. One of the benefits of such system architecture is easy management and configuration because all intelligence is now concentrated in CCU and not in AD.

The splitting amount between AD and CCU can be in various forms, for instance:
- local MAC,
- split MAC, and
- remote MAC.
   In IETF (Internet Engineering Task Force) there is a working group CAPWAP that deals with this topic. In CAPWAP the CCU is named AC (Access Controller) and the AD is named WTP (Wireless Termination Point), see Figure 2.
   The architecture of an embodiment of the invention is shown in Figure 1. CPE A and CPE B each have an integrated ADSL/cable modem with a WTP. Each CPE A and CPE B has at least two (air) connection interfaces. One for "usual" mobile stations: IPTV STB(Set Top Box), Laptops, etc. and another is for communication with other CPEs. AC has an additional function in ISP: to control the traffic between two CPEs.
   IPTV may download the stream from a video server via CPE A (home CPE) and the whole bandwidth is occupied. This will block the other traffic like a large file download or VoIP call for laptop 32. When a user sends a large e-mail, the CPE A can at once detect this traffic problem in WTP and send a request to AC. AC can then control the two CPE A and CPE B (neighborhood CPE) to communicate with each other, to build a link between them and then control CPE A to transfer the traffic to CPE B. The large e-mail is sent via CPE A, CPE B and to the ISP into the Internet.
   The link between CPE A and CPE B depends on WTP architecture.
- for local MAC and split MAC architecture the data sent via the link are layer 2 frames, which can be, for example, a usual MAC layer frame, VLAN (Virtual Local Area Network), tunneling etc.
- for remote MAC architecture, CPE is only a repeater for forwarding the traffic for CPE A to CPE B.

Unlike usual access point and WLAN router, CPE A and CPE B do not communicate with each other autonomously. They are controlled by AC to avoid user security and privacy problems.

There are, for instance, the following relevant features:
1. As mentioned above, there may be some other projects to provide "multi-homing", like PERM. But in PERM mobile stations (laptop, IPTV) have the possibility to connect directly to both CPE A or CPE B. The usual connection is to CPE A (the home CPE), only on demand, an additional connection to CPE B is established directly between mobile stations (first linked to CPE A) and CPE B.
2. Usually access points and WLAN routers work independently with regard to each other and autonomously. The configuration of such devices can only be done one by one. There may be some problems:
   - How to configure a client (in laptop) to connect two access points/routers?
   - Privacy and security in access points/routers: Should an access point/router be open for all users or just for some of them? How to control access?
3. As far as it is known there is no access point or router that has the function of communicating among access points, except some WLAN repeaters. Even if there are such devices, the configuration for these devices would not be easy.
4. Unlike usual access point and WLAN router, CPE A and CPE B do not communicate with each other autonomously in an embodiment of this invention. They are controlled and configured by AC to avoid user security and privacy problems. Easy management and configuration is possible by the ISP (Internet Service Provider).
5. It is a service provided by ISP, not by private households.

There are many changes possible. It is possible, for instance, to include more than two CPEs. CPE A may simultaneously, for instance, transmit data to or from CPE B and a CPE C additionally to the direct data flow between CPE A and ISP. Furthermore, other protocols and/or different control messages may be used.

### List of reference signs

- 10: network
- 11: Internet
- 12: provider unit
- 14,16: user unit
- 18,20: line
- 22: common portion
- 24: separate portion
- 26,28: house, apartment
- 30, 32: user device
- 34,36: antenna
- 40 to 46: wireless link
- 50: access controller
- 52a, 52b: modem
- 60: terminating unit (WTP)
- 61: repeater unit
- 62: modem
- 70: terminating unit
- 72: modem
- 78,80: data flow
- 100 to 104: stack of protocol layers
- 110: physical layer
- 112: MAC layer
- 114: CAPWAP function layer
- 116: bracket
- 118: reference point
- 120: physical layer
- 122: real time part of MAC layer
- 124: non real time part of MAC layer
- 126: CAPWAP function layer
- 128 to 130: bracket
- 132: reference point
- 140: physical layer
- 142: MAC layer
- 144: CAPWAP function layer
- 146: bracket
- 148: reference point
- 150 to 154: time line
- AC: access controller
- WTP: wireless termination point
- CAPWAP: Control And Provisioning of Wireless Access Points
- t0 to t12: time
- M0 to M6: message
- D0,D2: data
- AID3: association identifier

## Claims

1. Data transmission network, comprising:
- in a third network element (12) a first transmitter/receiver unit (52a) and a second transmitter/receiver unit (52b), the first transmitter/receiver unit (52a) being connected to a first network element (14) via a first link (18) and the second transmitter/receiver unit (52b) being connected to a second network element (16) via a second link (20), wherein the first network element (12) and the second network element (14) are connected via a third link (44),
- in the third network element (12) a control unit that is able to initiate transmission of a first data flow (78) between a fourth network element (30) and the third network element (12) via the first network element (14), and
the transmission of a second data flow (80) between a fifth network element (32) and the third network element (12) via the first network element (14) and the second network element (16), wherein
the first data flow (78) and the second data flow (80) are transmitted at least in part simultaneously, and
the control unit (50) is arranged to check in response to a request for establishing the second data flow whether the first link (18) can be used for the second data flow (80), and to use the third link (44) and the second link (20) for the second data flow (80) if the first link (18) cannot be used for the second data flow (80).

2. Data transmission network according to claim 1,
wherein the third link (44) is a wireless link.

3. Data transmission network according to claim 1 or 2,
wherein the first network element (14) and the second network element (16) are arranged in different houses (26, 28) or in different apartments.

4. Data transmission network according to one of the preceding claims, wherein the first network element (14) transmits via the third link (44) according to the WLAN transmission protocol.

5. Method for data transmission in a network comprising
- in a third network element (12) a first transmitter/receiver unit (52a) and a second transmitter/receiver unit (52b), the first transmitter/receiver unit (52a) being connected to a first network element (14) via a first link (18) and the second transmitter/receiver unit (52b) being connected to a second network element (16) via a second link (20), wherein the first network element (14) and the second network element (16) are connected via a third link (44), and
- in the third network element (12) a control unit that is able to initiate transmission of a first data flow (78) between a fourth network element (30) and the third network element (12) via a first network element (14) and transmission of a second data flow (80) between a fifth network element (32) and the third network element (12) via the first network element (14) and the second network element (16), wherein the first data flow (78) and the second data flow (80) are transmitted at least in part simultaneously,
the method comprising the steps of:
- requesting for establishing the second data flow (18), and
- the control unit (50) checking in response to the request for establishing the second data flow (80) whether the first link (18) can be used for the second data flow (80) and using the third link (44) and the second link (20) for the second data flow (80) if the first link (18) cannot be used for the second data flow (80).

## Patentansprüche

1. Datenübertragungsnetzwerk, umfassend:
- in einem dritten Netzwerkelement (12) eine erste Sender/Empfängereinheit (52a) und eine zweite Sender/Empfängereinheit (52b), wobei die erste Sender/Empfängereinheit (52a) über eine erste Verbindung (18) mit einem ersten Netzwerkelement (14) verbunden ist und die zweite Sender/Empfängereinheit (52b) über eine zweite Verbindung (20) mit einem zweiten Netzwerkelement (16) verbunden ist, wobei das erste Netzwerkelement (12) und das zweite Netzwerkelement (14) über eine dritte Verbindung (44) verbunden sind,
- in dem dritten Netzwerkelement (12) eine Steuereinheit mit der Fähigkeit zum Einleiten von Übertragung eines ersten Datenflusses (78) zwischen einem vierten Netzwerkelement (30) und dem dritten Netzwerkelement (12) über das erste Netzwerkelement (14) und der Übertragung eines zweiten Datenflusses (80) zwischen einem fünften Netzwerkelement (32) und dem dritten Netzwerkelement (12) über das erste Netzwerkelement (14) und das zweite Netzwerkelement (16), wobei der erste Datenfluss (78) und der zweite Datenfluss (80) mindestens teilweise gleichzeitig übertragen werden und die Steuereinheit (50) dafür ausgelegt ist, als Reaktion auf eine Anforderung der Herstellung des zweiten Datenflusses zu prüfen, ob die erste Verbindung (18) für den zweiten Datenfluss (80) verwendet werden kann, und die dritte Verbindung (44) und die zweite Verbindung (20) für den zweiten Datenfluss (80) zu verwenden, wenn die erste Verbindung (18) nicht für den zweiten Datenfluss (80) verwendet werden kann.

2. Datenübertragungsnetzwerk nach Anspruch 1, wobei die dritte Verbindung (44) eine drahtlose Verbindung ist.

3. Datenübertragungsnetzwerk nach Anspruch 1 oder 2, wobei das erste Netzwerkelement (14) und das zweite Netzwerkelement (16) in verschiedenen Häusern (26, 28) oder in verschiedenen Wohnungen angeordnet sind.

4. Datenübertragungsnetzwerk nach einem der vorhergehenden Ansprüche, wobei das erste Netzwerkelement (14) gemäß dem WLAN-Übertragungsprotokoll über die dritte Verbindung (44) überträgt.

5. Verfahren zur Datenübertragung in einem Netzwerk, umfassend:
- in einem dritten Netzwerkelement (12) eine erste Sender/Empfängereinheit (52a) und eine zweite Sender/Empfängereinheit (52b), wobei die erste Sender/Empfängereinheit (52a) über eine erste Verbindung (18) mit einem ersten Netzwerkelement (14) verbunden ist und die zweite Sender/Empfängereinheit (52b) über eine zweite Verbindung (20) mit einem zweiten Netzwerkelement (16) verbunden ist, wobei das erste Netzwerkelement (14) und das zweite Netzwerkelement (16) über eine dritte Verbindung (44) verbunden sind, und
- in dem dritten Netzwerkelement (12) eine Steuereinheit mit der Fähigkeit zum Einleiten von Übertragung eines ersten Datenflusses (78) zwischen einem vierten Netzwerkelement (30) und dem dritten Netzwerkelement (12) über ein erstes Netzwerkelement (14) und Übertragung eines zweiten Datenflusses (80) zwischen einem fünften Netzwerkelement (32) und dem dritten Netzwerkelement (12) über das erste Netzwerkelement (14) und das zweite Netzwerkelement (16), wobei der erste Datenfluss (78) und der zweite Datenfluss (80) mindestens teilweise gleichzeitig übertragen werden,
wobei das Verfahren die folgenden Schritte umfasst:
- Anfordern der Herstellung des zweiten Datenflusses (18) und
- durch die Steuereinheit (50) Prüfung, als Reaktion auf die Anforderung der Herstellung des zweiten Datenflusses (80), ob die erste Verbindung (18) für den zweiten Datenfluss (80) verwendet werden kann, und Verwendung der dritten Verbindung (44) und der zweiten Verbindung (22) für den zweiten Datenfluss (80), wenn die erste Verbindung (18) nicht für den zweiten Datenfluss (80) verwendet werden kann.

## Revendications

1. Un réseau de transmission de données, comprenant :
- dans un troisième élément de réseau (12), une première unité émetteur/récepteur (52a) et une deuxième unité émetteur/récepteur (52b), la première unité émetteur/récepteur (52a) étant reliée à un premier élément de réseau (14) par l'intermédiaire d'une première liaison (18) et la deuxième unité émetteur/récepteur (52b) étant reliée à un deuxième élément de réseau (16) par l'intermédiaire d'une deuxième liaison (20), dans lequel le premier élément de réseau (12) et le deuxième élément de réseau (14) sont reliés par l'intermédiaire d'une troisième liaison (44),
- dans le troisième élément de réseau (12), une unité de commande qui est capable de démarrer une transmission d'un premier flux de données (78) entre un quatrième élément de réseau (30) et le troisième élément de réseau (12) par l'intermédiaire du premier élément de réseau (14), et la transmission d'un deuxième flux de données (80) entre un cinquième élément de réseau (32) et le troisième élément de réseau (12) par l'intermédiaire du premier élément de réseau (14) et du deuxième élément de réseau (16), dans lequel
le premier flux de données (78) et le deuxième flux de données (80) sont transmis au moins en partie simultanément, et
l'unité de commande (50) est agencée de façon à vérifier, en réponse à une demande d'établissement du deuxième flux de données, si la première liaison (18) peut être utilisée pour le deuxième flux de données (80), et de façon à utiliser la troisième liaison (44) et la deuxième liaison (20) pour le deuxième flux de données (80) si la première liaison (18) ne peut pas être utilisée pour le deuxième flux de données (80).

2. Un réseau de transmission de données selon la revendication 1, dans lequel la troisième liaison (44) est une liaison sans fil.

3. Un réseau de transmission de données selon la revendication 1 ou 2, dans lequel le premier élément de réseau (14) et le deuxième élément de réseau (16) sont installés dans des maisons différentes (26, 28) ou des appartements différents.

4. Un réseau de transmission de données selon l'une quelconque des revendications précédentes, dans lequel le premier élément de réseau (14) transmet par l'intermédiaire de la troisième liaison (44) selon le protocole de transmission WLAN.

5. Un procédé de transmission de données dans un réseau comprenant
- dans un troisième élément de réseau (12), une première unité émetteur/récepteur (52a) et une deuxième unité émetteur/récepteur (52b), la première unité émetteur/récepteur (52a) étant reliée à un premier élément de réseau (14) par l'intermédiaire d'une première liaison (18) et la deuxième unité émetteur/récepteur (52b) étant reliée à un deuxième élément de réseau (16) par l'intermédiaire d'une deuxième liaison (20), dans lequel le premier élément de réseau (14) et le deuxième élément de réseau (16) sont reliés par l'intermédiaire d'une troisième liaison (44), et
- dans le troisième élément de réseau (12), une unité de commande qui est capable de démarrer une transmission d'un premier flux de données (78) entre un quatrième élément de réseau (30) et le troisième élément de réseau (12) par l'intermédiaire d'un premier élément de réseau (14), et la transmission d'un deuxième flux de données (80) entre un cinquième élément de réseau (32) et le troisième élément de réseau (12) par l'intermédiaire du premier élément de réseau (14) et du deuxième élément de réseau (16), dans lequel le premier flux de données (78) et le deuxième flux de données (80) sont transmis au moins en partie simultanément,
le procédé comprenant les opérations suivantes :
- la demande d'établissement du deuxième flux de données (18) et
- la vérification par l'unité de commande (50), en réponse à la demande d'établissement du deuxième flux de données (80), si la première liaison (18) peut être utilisée pour le deuxième flux de données (80), et l'utilisation de la troisième liaison (44) et de la deuxième liaison (20) pour le deuxième flux de données (80) si la première liaison (18) ne peut pas être utilisée pour le deuxième flux de données (80).
